# EUROPÄISCHE PATENTSCHRIFT

(11) **EP 1 784 793 B1**
(45) Veröffentlichungstag und Bekanntmachung des Hinweises auf die Patenterteilung: **28.04.2010**
(21) Anmeldenummer: 05769828.4
(22) Anmeldetag: 03.08.2005
(51) Int. Cl.: G07C 5/08, B60K 35/00, B60R 16/02

(54) **VERFAHREN ZUR VERWALTUNG VON EREIGNISSEN**
METHOD FOR MANAGING EVENTS
PROCEDE DE GESTION D'EVENEMENTS

(30) Priorität: 02.09.2004 DE 102004042940
(43) Veröffentlichungstag der Anmeldung: 16.05.2007
(73) Patentinhaber: Continental Automotive GmbH, 30165 Hannover (DE)
(72) Erfinder: NAETHER, Horst, 78052 Villingen-Schwenningen (DE)
(86) Internationale Anmeldenummer: PCT/EP2005/053797
(87) Internationale Veröffentlichungsnummer: WO 2006/024588

(56) Entgegenhaltungen:
- DE-A1- 4 444 443
- DE-A1- 10 052 307
- DE-A1- 10 052 654
- DE-A1- 19 919 216

## Beschreibung

Die Erfindung betrifft ein Verfahren zur Verwaltung von Ereigniseinträgen, die Ereignissen zugeordnet sind, mittels eines digitalen Tachographen zur elektronischen Aufzeichnung personenbezogener Daten, die den Betrieb eines Nutzfahrzeuges betreffen.

Bei dem Betrieb eines Tachographen geht es im Wesentlichen um die zeitabhängige Aufzeichnung einer Fahrzeuggeschwindigkeit und die Aufzeichnung von Aktivitäten in Zuordnung zu einer oder mehreren Personen. Wesentliches Element hierbei ist die Überwachung von Lenkkzeiten, Ruhezeiten usw., um die Einhaltung der gesetzlichen Vorschriften zu überwachen. Hierbei kann es zu mehreren Ereignissen kommen, beispielsweise zu Fehlern der Aufzeichnung, zur zyklischen Übertragung eines mit der Geschwindigkeit korrelierten Messwertes an das Aufzeichnungsorgan oder zu der Betätigung von Bedienelementen zur Steuerung des Aufzeichnungsvorgangs. Im Zeitalter des mechanischen Tachographen wurden derartige Ereignisse im Wesentlichen unabhängig voneinander bearbeitet, wobei häufig die bedienende Person eine Abhängigkeit direkt auf der Ebene der Aufzeichnung schuf. Daneben ermöglichte die funktionelle Beschaffenheit des mechanischen Geräts nur eine weniger differenzierte Erfassung von beispielsweise System- oder Messfehlern und dem Benutzer stand eine nur auf das Wesentliche beschränkte Auswahl an Funktionen zur Verfügung. Die Aufzeichnungsvorrichtung bzw. der Tachograph teilte dem Benutzer bei Vorliegen eines Ereignisses, welches ein Einwirken des Benutzers auf das Aufzeichnungsgerät erforderlich macht, lediglich einen undifferenzierten Hinweis mit, so dass die Einzelheiten des weiteren Bedienvorgangs von dem Benutzer kraft seiner Bedienkompetenz festzulegen waren. Die neue, digitale Generation von Tachographen stellt im Vergleich zu den herkömmlichen Geräten eine sehr viel differenziertere Funktionalität zur Verfügung. Dezidierte Fehlermeldungen und Handlungsanweisungen leiten den Benutzer im Falle entsprechender Ereignisse durch eine menügestützte Bedienung. Insbesondere hinsichtlich der Möglichkeiten der Auswertung der Aufzeichnungen stehen dem Führer des Nutzfahrzeuges völlig neue Funktionen zur Verfügung, so dass er beispielsweise auf das Erfordernis einer Pausenzeit nach gesetzlichen Bestimmungen automatisch aufmerksam gemacht wird. Darüber hinaus verhindern neuartige Sicherheitsmechanismen zuverlässig den Erfolg in betrügerischer Absicht vorgenommener Manipulationsversuche. Der stark erweiterte Funktionsumfang und die erhöhte Komplexität der gesamten Anordnung aus Tachograph, Geschwindigkeitssensor und weiterer angeschlossener Geräte potenziert den Anfall zu berücksichtigender Ereignisse.

Bei dem Geschwindigkeitssensor handelt es sich um einen Radumdrehungssensor, im Allgemeinen Bewegungsgeber (engl. motion sensor) genannt, der Impulse liefert als Maß für die Radumdrehungen, aus denen der Fahrtschreiber anhand einer Radumfangskonstanten den zurückgelegten Weg des Fahrzeugs berechnet und daraus in definierten Zeitabständen die Geschwindigkeit ermittelt.

Aus der Offenlegungsschrift DE 44 44 443 A1 ist ein Verfahren zur Anzeige wenigstens einer Nachricht auf einer Anzeigefläche eines Kraftfahrzeugs bekannt, wobei die Nachricht so lange angezeigt wird, bis eine Quittierung durch Betätigung wenigstens eines Eingabelements durch eine Bedienperson erfolgt.

Die Erfindung hat es sich daher zur Aufgabe gemacht, ein Verfahren zu schaffen, welches Ereignisse der vorgenannten Art in chronologisch sinnvoller und prioritätsgerechter Weise einer Berücksichtigung, insbesondere Weiterverarbeitung zuführt.

Die erfindungsgemäße Lösung ist gekennzeichnet durch die Merkmale des Anspruchs 1. Die Unteransprüche enthalten vorteilhafte Weiterbildungen der Erfindung.

Unter Ereigniseinträgen im Sinne der Erfindung sind elektronische Aufzeichnungen zu verstehen, die unter Verwendung einer vorgegebenen Namenskonvention, insbesondere unter Angabe der Ereigniszeit in einem elektronischen Speicher, nämlich dem zentralen Ereignisspeicher eingetragen werden. Die Eintragung wird hierbei von Basiskomponenten vorgenommen, die voneinander nahezu unabhängig Ereignisse aufnehmen, beispielsweise die Übermittlung eines Messwertes von einem Drehzahlsensor bzw. Bewegungsgeber oder Aufzeichnungsfehler oder Sicherheitsverletzungen oder das Erfordernis einer Pausenzeit und diese Ereignisse als Ereigniseinträge in den Ereignisspeicher eintragen. Hierbei wird den Ereignissen vorzugsweise von den Basiskomponenten eine Priorität zugeordnet, die sich aus einer übergeordneten Prioritäten-Konvention in Abhängigkeit von der Art des Ereignisses ergibt. Ein in Software implementiertes Ereignismodul durchsucht zyklisch den Ereignisspeicher nach Ereigniseinträgen und wählt denjenigen mit der höchsten Priorität aus, um diesen mit einem Steuerparameter zu versehen. In Abhängigkeit von dem Steuerparameter erfolgt eine Weiterverarbeitung des Ereigniseintrages in der Weise, dass aus dem Ereigniseintrag ein dem zugrunde liegenden Ereignis zugeordneter Speichereintrag in einen Fahrzeugspeicher initiiert bzw. generiert wird oder mittels eines Car-Area-Networks an eine angeschlossene Komponente Steuersignale gesendet werden oder eine Ausgabe auf einen angegliederten Drucker eingeleitet werden kann oder eine Darstellung auf einer Anzeige eingeleitet wird oder eine Datenübertragung zu einem externen Datenspeicher veranlasst wird. Der besondere Vorteil der Erfindung liegt darin, dass Ereignisse zu beliebiger Zeit Berücksichtigung finden, ohne den stark belasteten Hauptprozessor des Tachographen stabilitätsbedrohlich mit der Bearbeitung der durch die Ereignisse initiierten Prozesse zur Unzeit zu beaufschlagen. Der zentrale Ereignisspeicher wirkt hierbei als zeitlicher Puffer und ermöglicht eine gesteuerte und planmäßige Abarbeitung der mittels der Ereignisse initiierten Prozesse, wobei sich aufgrund der erfindungsgemäßen Priorisierung bei der Ablage der Ereigniseinträge in dem Ereignisspeicher besondere Synergieeffekte ergeben, die die Auslastung des zentralen Prozessors des Tachographen auf das Minimum des Erforderlichen reduzieren.

Eine besonders vorteilhafte Weiterbildung der Erfindung sieht vor, dass die Steuertabelle Steuerparameter in Abhängigkeit von einer dem Ereigniseintrag zugeordneten Ereignisreferenznummer enthält. Die Ereignisreferenznummer kann hierbei schlicht in der Benennung des Ereigniseintrages bestehen oder in einem dem Ereigniseintrag bzw. dem Ereignis zugeordneten Attribut. Im Falle von Änderungen der Weiterverarbeitung von Ereigniseinträgen ergibt sich eine besondere Flexibilität, da hier lediglich Einträge in der Steuertabelle zu ändern sind. Mit Vorteil kann das erfindungsgemäße Verfahren vorsehen, dass die Basiskomponenten auf eine Zuordnungsfunktion zugreifen, welche den Ereigniseinträgen eine Priorität zuordnet. Diese Zuordnungsfunktion ist hierbei vorzugsweise Gegenstand des zentralen Zugriffs, so dass Änderungen hinsichtlich der Priorität der Behandlung eines Ereignisses bzw. Ereigniseintrages mit minimalem Aufwand implementiert werden können, ohne Veränderungen an den Basiskomponenten vornehmen zu müssen.

Zur Minimierung des Aufwandes der Durchsuchung des Ereignisspeichers nach dem Ereigniseintrag mit der höchsten Priorität ist es zweckmäßig, wenn der zentrale Ereignisspeicher eine eindeutige Zuordnung von Speicherplätzen für Ereigniseinträge zu Prioritäten aufweist. Auf diese Weise werden die Ereigniseinträge der Basiskomponenten von der Zuordnungsfunktion in Abhängigkeit von der Priorität nur an einem bestimmten Speicherplatz des Ereignisspeichers vorgenommen und das Ereignismodul durchsucht die Speicherplätze nur noch einmalig sequentiell mit abnehmender zugeordneter Priorität nach der ersten Belegung mit einem Ereigniseintrag ohne zunächst sämtliche Ereigniseinträge hinsichtlich ihrer Priorität vergleichen zu müssen. Durch die durch die Priorität festgelegte feste Speicherstelle eines Ereignisses wird ein bestimmtes Ereignis immer in die gleiche Speicherstelle geschrieben. Aufgrund der festen Zuordnung von Prioritäten zu Speicherstellen können keine Prioritätskonflikte auftreten. Daneben eröffnet sich hierbei die Möglichkeit, dass wenn ein Ereignis mit Dauer mehrmals gemeldet wird, während es noch nicht beendet ist, die Meldung einfach ignoriert werden kann. Wird das gleiche Ereignis wieder gemeldet, nachdem es schon beendet wurde, wird dies registriert durch Erhöhen des Ereigniszählers. In keinem Fall muss die Basiskomponente warten, bis der Speicherplatz wieder frei wird.

Ereignisse bzw. Ereigniseinträge mit gleicher Priorität werden somit in chronologischer Reihenfolge ihres Auftretens von dem Ereignismodul einer Weiterverarbeitung zugeführt bzw. mit einem Steuerparameter versehen.

Besonders zweckmäßig weitergebildet wird das erfindungsgemäße Verfahren, wenn das Ereignismodul anhand einer Attributetabelle den Ereigniseinträgen in Abhängigkeit von dem Speicherplatz Attribute zuordnet. Die zugeordneten Attribute können nachfolgenden Bearbeitungsschritten, beispielsweise einem Ausdruck oder einer Ausgabe auf einer Anzeige, ergänzende Information weitergeben.

Insbesondere im Rahmen der erfindungsgemäßen Anwendung ist es wichtig, dass die nach gesetzlichen Vorschriften vorzunehmenden Speichereinträge in dem Fahrzeugspeicher bzw. auf einer Chipkarte gehobenen Stabilitätskriterien genügen, so dass es von Vorteil ist, wenn das Ereignismodul den Eintrag eines dem Ereignis des Ereigniseintrags zugeordneten Speichereintrags in den Fahrzeugspeicher initiiert, in dem es den Ereigniseintrag an ein Speichermodul übergibt, welches einen dem Ereignis zugeordneten Speichereintrag in einem Fahrzeugspeicher einträgt.

Ebenfalls von besonderer Bedeutung für die Anwendung im Rahmen eines digitalen Tachographen ist die Aufzeichnung von Ereignissen mit einer zeitlichen Dauer, bei welcher die in den Ereignisspeicher eingetragene Basiskomponente den Beginn des Ereignisses und das Ende in den Ereignisspeicher einträgt und das Ereignismodul das Ende der Ereignisses mit dem gleichen Zeitwert belegt wie den Beginn, wenn kein Ende von den Basiskomponenten eingetragen worden ist, weil bestimmte Ereignisse laut ihrer Definition keine Dauer haben. Ein besonderer Vorteil der Gleichbelegung des Zeitwertes des Beginns und des Endes liegt in der Vermeidung nachfolgender Fehler.

In der Folge ist die Erfindung zur Verdeutlichung anhand eines Ausführungsbeispiels unter Bezugnahme auf eine Zeichnung näher beschrieben. Es zeigt:

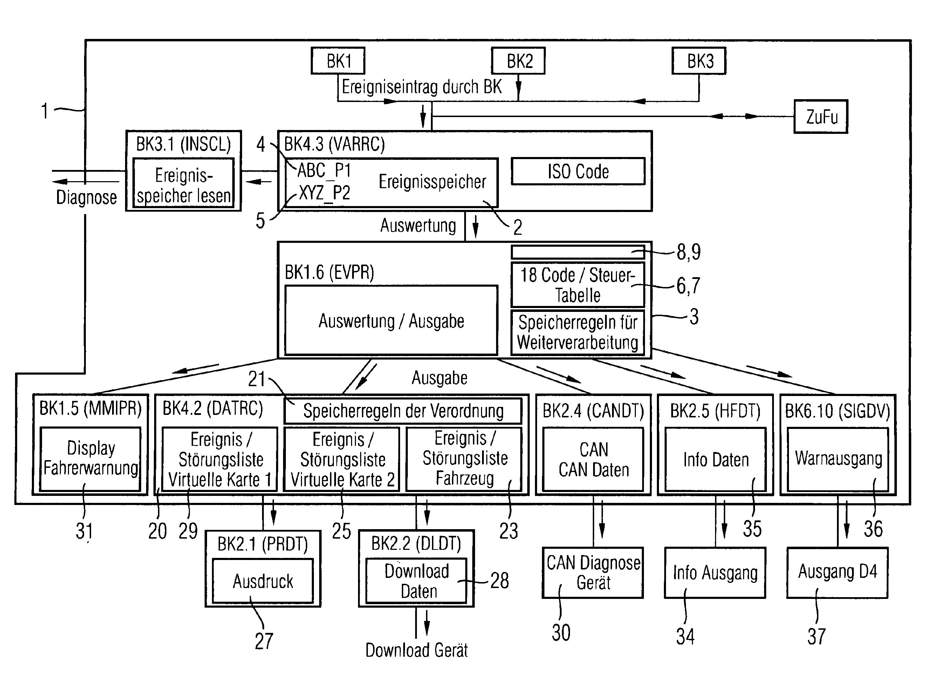

- Fig. 1:: eine schematische Darstellung des erfindungsge- mäßen Verfahrens mittels eines Ablaufdiagramms,

Fig. 1 zeigt den grundsätzlichen Ablauf und das Zusammenwirken verschiedener Komponenten gemäß dem Verfahren nach der Erfindung. Ein Tachograph 1 ist mittels einer Systemgrenze symbolisiert, die mit dem Bezugszeichen 1 versehen ist. Verschiedene Basiskomponenten BK1, BK2, BK3 haben schreibenden Zugriff auf einen Ereignisspeicher 2, in welchem die Basiskomponenten BK1, BK2, BK3 bei Auftreten eines Ereignisses, beispielsweise dem Erfordernis einer Darstellung auf einer Anzeige, einen Ereigniseintrag ABC, XYZ in den Ereignisspeicher 2 eintragen. Der Ereigniseintrag ABC, XYZ wird hierbei von den Basiskomponenten unter Zugriff auf eine Zuordnungsfunktion ZuFu mit einer Priorität P1, P2 versehen.

Die Basiskomponenten BK1, BK2, BK3 tragen Ereignisse als Ereigniseinträge ABC, XYZ bei ihrem Auftreten in den zentralen Ereignisspeicher 2 als "pending" ein und bei Ende als "terminated". Hierbei besteht jeder Ereigniseintrag XYZ, ABC aus einem Status, einem Ereigniszähler sowie einer Beginnzeitmarke und einer Endezeitmarke. Der Ereigniszähler dient nur statistischen Zwecken. Im Status sind die Bitschalter (engl. Flags) "pending", "terminated", "event active", "start-LCD", "active-LCD" und "cyclic-event" enthalten.

Ein Ereignismodul 3 durchsucht den Ereignisspeicher 2 nach dem Ereigniseintrag ABC, XYZ mit der höchsten Priorität P1, P2. Die Ereigniseinträge ABC, XYZ in dem Ereignisspeicher 2 weisen in Abhängigkeit von ihrer Priorität P1, P2 eine eindeutige Zuordnung zu einem Speicherplatz 4, 5 auf, so dass das Ereignismodul 3 die einzelnen Speicherplätze 4, 5 lediglich in sequentieller Folge abfallender Priorität P1, P2 durchgeht und den Ereigniseintrag ABC, XYZ des ersten belegten Speicherplatzes 4, 5 einer Weiterverarbeitung zuführt.

Im Rahmen der Weiterverarbeitung ordnet das Ereignismodul 3 dem Ereigniseintrag ABC, XYZ einen Steuerparameter 6 aus einer Steuerparametertabelle 7 und Attribute 8 aus einer Attributtabelle 9 zu.

Der mit Attributen 8 und einem Steuerparameter 6 erweiterte Ereigniseintrag ABC, XYZ wird von dem Ereignismodul 3 einer Ausgabe, einer Speicherung, einer Weitergabe oder einer Weiterverarbeitung zugeführt. Für den Fall, dass das Steuerparameter 6 eine Ausgabe vorsieht, wird der erweiterte Ereigniseintrag ABC, XYZ an ein Ausgabemodul 20 übergeben, welches außerdem ein Speichermodul 21 umfasst, das eine Speicherung eines auf dem Ereigniseintrag ABC, XYZ basierenden Speichereintrages in einem Fahrzeugspeicher 23 oder einem Kartenspeicher 24, 25 steuert. Die Kartenspeicher 24, 25 sind beide Bestandteil des Tachographen 1 und als lediglich virtuelle Chipkarten ausgebildet, das heißt, Speicherbereiche in dem Tachographen 1 sind mit identischen Dateneinträgen belegt, wie eine zur Aufzeichnung in den Tachographen 1 eingeführte tatsächliche Chipkarte. Soll ein Ereignis auf einem Drucker 27 ausgegeben werden, führt das Ausgabemodul 20 den erweiterten Ereigniseintrag ABC, XYZ dem Drucker 27 eine entsprechende Ansteuerung zu. Daneben ermöglicht das Ausgabemodul 20 einen Datendownload mittels eines verbundenen Downloadmoduls 28. Eine Übertragung der Daten ausgehend von dem Ereignismodul 3 an andere Komponenten 30 kann mittels des Car-Area-Networks CAN erfolgen. Des Weiteren ermöglicht das Ereignismodul 3 die Ausgabe auf einem Display 31 des Tachographen 1. Die Möglichkeit des Anschlusses weiterer Ausgabegeräte 34 bietet ein mit dem Ereignismodul 3 in Verbindung stehendes Infomodul 35. Mittels eines Warnmoduls 36 ist es dem Ereignismodul 3 möglich, Warnmeldungen beispielsweise auf einem Kombiinstrument 37 auszugeben.

## Patentansprüche

1. Verfahren zur Verwaltung von Ereigniseinträgen (ABC, XYZ), die Ereignissen zugeordnet sind, mittels eines digitalen Tachographen (1) zur elektronischen Aufzeichnung personenbezogener Daten, die den Betrieb eines Nutzfahrzeuges betreffen, bei welchem
- Ereignisse als Ereigniseinträge von Basiskomponenten (BK1, BK2, BK3) in einem zentralen Ereignisspeicher (2) mit einer Priorität (P1, P2) eingetragen werden,
- ein Ereignismodul (3) in regelmäßigen Zeitabständen den Ereignisspeicher (2) nach dem Ereigniseintrag (ABC, XYZ) mit der höchsten Priorität (P1, P2) durchsucht und den Ereigniseintrag (ABC, XYZ) mit der höchsten Priorität (P1, P2) auswählt,
- das Ereignismodul (3) mittels einer Steuerparametertabelle (7) dem Ereignis des ausgewählten Ereigniseintrags (ABC, XYZ) einen Steuerparameter (6) zuordnet und
- abhängig von dem Steuerparameter (6)
- einen dem Ereignis des Ereigniseintrags (ABC, XYZ) zugeordneten Speichereintrag in einen Fahrzeugspeicher (23)initiiert oder
- mittels eines Car-Area-Networks (CAN) an eine andere Komponente (30) Steuersignale sendet oder
- eine Ausgabe auf einem Drucker (27) vorbereitet oder
- eine Darstellung auf einer Anzeige initiiert oder
- eine Datenübertragung zu einem externen Datenspeicher veranlasst.

2. Verfahren nach Anspruch 1, **dadurch gekennzeichnet, dass** die Steuerparametertabelle (7) Steuerparameter (6) in Abhängigkeit von einer dem Ereigniseintrag (ABC, XYZ) zugeordneten Ereignisreferenznummer enthält.

3. Verfahren nach Anspruch 1, **dadurch gekennzeichnet, dass** die Basiskomponenten (BK1, BK2, BK3) auf eine Zuordnungsfunktion (ZuFu) zugreifen, welche den Ereigniseinträgen (ABC, XYZ) eine Priorität (P1, P2) zuordnet.

4. Verfahren nach Anspruch 3, **dadurch gekennzeichnet, dass** der zentrale Ereignisspeicher (2) eine eindeutige Zuordnung von Speicherplätzen (4, 5)für Ereigniseinträge (ABC, XYZ) zu Prioritäten (P1, P2) aufweist.

5. Verfahren nach Anspruch 4, **dadurch gekennzeichnet, dass** das Ereignismodul (3) anhand einer Attributetabelle (9) den Ereigniseinträgen (ABC, XYZ) in Abhängigkeit von dem Speicherplatz (4, 5) Attribute (8) zuordnet.

6. Verfahren nach Anspruch 1, **dadurch gekennzeichnet, dass** das Ereignismodul (3) den Eintrag eines dem Ereignis des Ereigniseintrags (ABC, XYZ) zugeordneten Speichereintrags in den Fahrzeugspeicher (23) initiiert, indem es den Ereigniseintrag (ABC, XYZ) an ein Speichermodul (21) übergibt, welches einen dem Ereignis zugeordneten Speichereintrag in einem Fahrzeugspeicher (23) einträgt.

7. Verfahren nach Anspruch 1, **dadurch gekennzeichnet, dass** bei Ereignissen mit einer zeitlichen Dauer die in den Ereignisspeicher (2) eintragende Basiskomponente (BK1, BK2, BK3) den Beginn des Ereignisses und das Ende in den Ereignisspeicher (2) einträgt und das Ereignismodul (3) das Ende des Ereignisses mit dem gleichen Zeitwert belegt wie den Beginn, wenn kein Ende von der Basiskomponente (BK1, BK2, BK3) eingetragen worden ist.

8. Verfahren nach Anspruch 1, **dadurch gekennzeichnet, dass** bei Ereignissen, die als schwerwiegend oder Fehler klassifiziert sind, ein Steuerparameter "zyklisch" zugeordnet wird, der eine in regelmäßigen zeitlichen Abständen wiederkehrende symbolhafte Darstellung auf der Anzeige bewirkt.

## Claims

1. Method for managing event entries (ABC, XYZ) which are assigned to events, by means of a digital tachograph (1) for electronically recording personal data which relates to the operation of a utility vehicle, in which method
- events are entered with a priority (P1, P2) in a central event memory (2) as event entries of basic components (BK1, BK2, BK3),
- an event module (3) searches the event memory (2) at regular time intervals for the event entry (ABC, XYZ) with the highest priority (P1, P2), and selects the event entry (ABC, XYZ) with the highest priority (P1, P2),
- the event module (3) assigns a control parameter (6) to the event of the selected event entry (ABC, XY2) by means of a control parameter table (7), and
- as a function of the control parameter (6)
- initiates a memory entry, assigned to the event of the event entry (ABC, XYZ), in a vehicle memory (23), or
- transmits control signals to another component (30) by means of a car area network (CAN), or
- prepares an output at a printer (27), or
- initiates representation on a display, or
- brings about data transmission to an external data memory.

2. Method according to Claim 1, **characterized in that** the control parameter table (7) contains control parameters (6) as a function of an event reference number which is assigned to the event entry (ABC, XYZ).

3. Method according to Claim 1, **characterized in that** the basic components (BK1, BK2, BK3) access an assignment function (ZuFu) which assigns a priority (P1, P2) to the event entries (ABC, XYZ).

4. Method according to Claim 3, **characterized in that** the central event memory (2) has a uniquely defined assignment of memory locations (4, 5) for event entries (ABC, XYZ) to priorities (P1, P2).

5. Method according to Claim 4, **characterized in that** the event module (3) assigns attributes (8) to the event entries (ABC, XYZ) as a function of the memory location (4, 5) by means of an attribute table (9).

6. Method according to Claim 1, **characterized in that** the event module (3) initiates the entry of a memory entry, assigned to the event of the event entry (ABC, XYZ), in the vehicle memory (23) by transferring the event entry (ABC, XYZ) to a memory module (21) by which a memory entry assigned to the event is entered into a vehicle memory (23).

7. Method according to Claim 1, **characterized in that**, in the case of events with a duration, the basic component (BK1, BK2, BK3) which makes entries into the event memory (2) enters the start of the event and the end in the event memory (2), and the event module (3) assigns the same time value to the end of the event as to the start if an end has not been entered by the basic component (BK1, BK2, BK3).

8. Method according to Claim 1, **characterized in that** in the case of events which are classified as difficult or faults, a "cyclical" control parameter is assigned, said control parameter bringing about repeating symbolic representation on the display at regular time intervals.

## Revendications

1. Procédé permettant de gérer des enregistrements (ABC, XYZ) qui correspondent à des événements, au moyen d'un tachygraphe numérique (1) prévu pour l'enregistrement électronique de données spécifiques à des personnes et qui se rapportent à l'exploitation d'un véhicule utilitaire, procédé au cours duquel
- des événements sont enregistrés, avec une priorité (P1, P2), en tant qu'enregistrements de composantes de base (BK1, BK2, BK3) dans une mémoire centrale (2) d'événements,
- un module d'événements (3) recherche, à des intervalles de temps réguliers, dans la mémoire d'événements (2), l'enregistrement (ABC, XYZ) ayant la priorité la plus élevée (P1, P2) et sélectionne l'enregistrement (ABC, XYZ) ayant la priorité la plus élevée (P1, P2),
- au moyen d'un tableau (7) de paramètres de commande, le module d'événements (3) affecte un paramètre de commande (6) à l'événement correspondant à l'enregistrement (ABC, XYZ) sélectionné,
- en fonction du paramètre de commande (6),
- initie un enregistrement dans une mémoire (23) du véhicule correspondant à l'événement de l'enregistrement (ABC, XYZ) ou bien,
- envoie, à travers un réseau à bus CAN (Controller Area Network), des signaux de commande à une autre composante (30) ou bien
- prépare une édition sur une imprimante (27) ou bien
- initie une représentation sur un affichage ou bien
- provoque une transmission de données vers une mémoire de données externe.

2. Procédé selon la revendication 1, **caractérisé** p a r le fait que le tableau (7) de paramètres de commande renferme des paramètres de commande (6) qui sont fonction d'un numéro de référence des événements affecté à l'enregistrement (ABC, Y2).

3. Procédé selon la revendication 1, **caractérisé par le fait que** les composantes de base (BK1, BK2, BK3) ont recours à une fonction d'affectation (ZuFu), qui attribue une priorité (P1, P2) aux enregistrements (ABC, XYZ).

4. Procédé selon la revendication 3, **caractérisé par le fait que** la mémoire centrale (2) d'événements comporte une correspondance explicite entre des emplacements de mémoire (4, 5) pour des enregistrements d'événements (ABC, XYZ) et des priorités (P1, P2).

5. Procédé selon la revendication 4, **caractérisé par le fait que** le module d'événements (3) affecte, à l'aide d'un tableau d'attributs (9) et en fonction de l'emplacement de mémoire (4, 5), des attributs aux enregistrements d'événements (ABC, XYZ).

6. Procédé selon la revendication 1, **caractérisé par le fait que** le module d'événements (3) initie l'inscription dans la mémoire du véhicule (23) d'un enregistrement correspondant à l'événement de l'enregistrement d'événement (ABC, XYZ), en transmettant l'enregistrement (ABC, XYZ) à un module de mémorisation qui inscrit un enregistrement correspondant à l'événement dans une mémoire (23) du véhicule.

7. Procédé selon la revendication 1, **caractérisé par le fait que**, dans le cas d'événement ayant une durée temporaire, la composante de base (BK1, BK2, BK3) qui exécute l'inscription dans la mémoire des événements (2) enregistre le début de l'événement et la fin dans la mémoire des événements (2) et le module d'événements (3) inscrit pour la fin de l'événement la même valeur de temps que pour le début si la composante de base (BK1, BK2, BK3) n'a pas inscrit de fin.

8. Procédé selon la revendication 1, **caractérisé par le fait que**, dans le cas d'événements qui sont classés comme graves ou comme erreur, il est affecté un paramètre de commande "cyclique" qui provoque, à des intervalles de temps réguliers, une représentation symbolique répétitive sur l'affichage.
